# EUROPEAN PATENT APPLICATION

(11) **EP 4 303 991 A1**
(43) Date of publication of application: **10.01.2024**
(21) Application number: 23183350.0
(22) Date of filing: 04.07.2023
(51) Int. Cl.: H01M 50/247, H01M 50/503, H01M 50/516, H01M 50/519, H01M 50/522

(54) **BATTERY PACK**

(30) Priority: 07.07.2022 US 202217859584
(71) Applicant: Black & Decker, Inc., New Britain, CT 06053 (US)
(72) Inventor: ROBERTS, Michael W., Red Lion, 17356 (US); YATES, Andrew J., Baltimore, 21224 (US)
(74) Representative: SBD IPAdmin

(57) **Abstract**

The present disclosure is directed to a battery pack and a method of forming a battery pack. The battery pack may include a collection element for receiving and connection battery cell tabs of a plurality of pouch cell type battery cells. The collection element may be made from a single, stamped piece of metal. The battery pack may include a plastic housing that is injection molded about the metal stamped collection element. Such a configuration reduces the number of component parts and simplifies the manufacturing process.

## Description

### TECHNICAL FIELD

This application relates to a battery pack and a method for manufacturing and assembling a battery pack. In one implementation, the battery pack is configured to simplify monitoring individual cells of a multi-cell battery pack.

### BACKGROUND

Rechargeable and removable battery packs include a plurality of rechargeable battery cells. It is becoming common to use pouch type battery cells in such battery packs. Typically, the battery packs include a plurality of battery cells, for example five battery cells. The battery cells may be connected to each other in a series configuration. It is also desirable to monitor the voltage of each individual cell. In order to connect the battery cells together in a series configuration and to monitor the individual cells, the tabs of the battery cells must be connected to each other to form the series configuration.

It is known to connect the tabs to each other on a printed circuit board. The printed circuit board may include traces to the tab connections for monitoring the voltage of the individual cells.

It is desirable to reduce the component count and the component volume in a battery pack in order to reduce the cost of the battery pack and the overall volume of the battery pack.

### SUMMARY

An aspect of the present invention includes a battery pack.

A first embodiment of a battery pack, includes a housing; a printed circuit board (PCB); a plurality of battery cells, each of the plurality of battery cells including a pair of battery cell tabs, the pair of battery cells tabs including a negative tab and a positive tab; a set of core pack battery straps including a negative battery strap and a positive battery strap; a tab collection element, formed of a stamped metal and within a plastic housing, including a battery cell tab receiving and affixing portion, the battery cell tab receiving and affixing portion including individual receiving and affixing sections for receiving and coupling the battery cell tabs to the tab collection element and to each other, the receiving and affixing sections including a first section type for receiving and affixing a single battery cell tab and a second section type for receiving and affixing two battery cell tabs, the first section type including a single tab receiving slot and a tab affixing portion and the second section type including two tab receiving slots and a tab affixing portion between the two tab receiving slots.

In the aforementioned first embodiment, the first section type may further include a terminal section for coupling to the set of core pack battery straps.

In the aforementioned first embodiment, a first one of the first section type may include a first terminal section coupling the first one of the first section type to the negative core pack battery strap and a second one of the first section type includes a second terminal section coupling the second one of the first section type to the positive core pack battery strap.

In the aforementioned first embodiment, the tab collection element may be stamped to include (a) an exterior carrier portion about a perimeter of the stamping, the exterior carrier portion including two first, opposing side sections and two second, opposing side sections generally perpendicular to the two first, opposing side sections, wherein the exterior carrier portion is continuous about the metal stamping and (b) connecting sections the exterior carrier portion to the battery cell tab receiving and affixing portion.

The aforementioned first embodiment may further include a flexible circuit and wherein the second section type includes a voltage sense tab, the voltage sense tab extending generally perpendicularly from the second section type for connection to the flexible circuit and the voltage sense tab of each of the second section type are connected to the flexible circuit.

In the aforementioned first embodiment, the exterior carrier portion and the connecting sections may be removed from the tab collection element after the plastic housing is formed about the tab collection element.

In the aforementioned first embodiment, the battery cell tabs of the plurality of battery cells may be received in the tab receiving slots of the receiving and affixing portion.

In the aforementioned first embodiment, (1) a first battery cell may be received by the plastic housing such that a negative tab of the first battery cell is received in a first slot of the first receiving and affixing portion and a positive tab of the first battery cell is received in a first slot of the second receiving and affixing portion, (2) a second battery cell may be received by the plastic housing 42 such that a negative tab of the second battery cell is received in a second slot of the second receiving and affixing portion and a positive tab of the second battery cell is received in a first slot of the third receiving and affixing portion, (3) a third battery cell may be received by the plastic housing such that a negative tab of the third battery cell is received in a second slot of the third receiving and affixing portion and a positive tab of the third battery cell is received in a first slot of the fourth receiving and affixing portion, (4) a fourth battery cell may be received by the plastic housing such that a negative tab of the fourth battery cell is received in a second slot of the fourth receiving and affixing portion and a positive tab of the fourth battery cell is received in a first slot of the fifth receiving and affixing portion, and (5) a fifth battery cell may be received by the plastic housing such that a negative tab of the fifth battery cell is received in a second slot of the fifth receiving and affixing portion and a positive tab of the fifth battery cell is received in a first slot of the sixth receiving and affixing portion.

In the aforementioned first embodiment, the cell tabs may be folded onto an associated tab affixing portion.

In the aforementioned first embodiment, (1) the negative tab of the first battery cell may be folded onto a tab affixing portion of the first receiving and affixing portion, (2) the positive tab of the first battery cell and the negative tab of the second battery cell may be folded onto a tab affixing portion of the second receiving and affixing portion, (3) the positive tab of the second battery cell and the negative tab of the third battery cell may be folded onto a tab affixing portion of the third receiving and affixing portion, (4) the positive tab of the third battery cell and the negative tab of the fourth battery cell may be folded onto a tab affixing portion of the fourth receiving and affixing portion, (5) the positive tab of the fourth battery cell and the negative tab of the fifth battery cell may be folded onto a tab affixing portion of the fifth receiving and affixing portion, and (6) the positive tab of the fifth battery cell may be folded onto a tab affixing portion of the sixth receiving and affixing portion.

In the aforementioned first embodiment, the cell tabs may be affixed to each other and to the associated tab affixing portion.

In the aforementioned first embodiment, (1) the negative tab of the first battery cell may be affixed to the tab affixing portion of the first receiving and affixing portion, (2) the positive tab of the first battery cell and the negative tab of the second battery cell may be affixed to each other and to the tab affixing portion of the second receiving and affixing portion, (3) the positive tab of the second battery cell and the negative tab of the third battery cell may be affixed to each other and to the tab affixing portion of the third receiving and affixing portion, (4) the positive tab of the third battery cell and the negative tab of the fourth battery cell may be affixed to each other and to the tab affixing portion of the fourth receiving and affixing portion, (5) the positive tab of the fourth battery cell and the negative tab of the fifth battery cell may be affixed to each other and to the tab affixing portion of the fifth receiving and affixing portion, and (6) the positive tab of the fifth battery cell may be affixed to the tab affixing portion of the sixth receiving and affixing portion.

In the aforementioned first embodiment, the cell tabs may be affixed to each other and to the tab affixing portion by laser welding.

Another aspect of the present invention includes a method of forming a battery pack.

A first embodiment of a method of forming a battery pack, includes the steps of: forming a tab collection element of a stamped metal, the tab collection element including a battery cell tab receiving and affixing portion, the battery cell tab receiving and affixing portion including individual receiving and affixing sections for receiving and coupling a plurality of battery cell tabs to the tab collection element and to each other, the receiving and affixing sections including a first section type for receiving and affixing a single battery cell tab and a second section type for receiving and affixing two battery cell tabs, the first section type including a single tab receiving slot and a tab affixing portion and the second section type including two tab receiving slots and a tab affixing portion between the two tab receiving slots; placing the tab collection element in a mold; and injection molding plastic material into the mold about the tab collection element to form a housing.

In the aforementioned method of forming a battery pack, the tab collection element may be formed with an exterior carrier portion about the perimeter of the stamping.

In the aforementioned method of forming a battery pack, the exterior carrier portion may be formed with two first, opposing side sections and two second, opposing side sections generally perpendicular to the two first, opposing side sections, wherein the exterior carrier portion is continuous about the metal stamping.

In the aforementioned method of forming a battery pack, the tab collection element may be formed with support portions that connect the carrier portion to the battery cell tab receiving and affixing portion.

In the aforementioned method of forming a battery pack, the tab collection element may be formed with the exterior carrier portion and the support portions extending from the housing.

The aforementioned method of forming a battery pack may further include the step of removing the exterior carrier portion and the support portions from the battery cell tab receiving and affixing portion.

In the aforementioned method of forming a battery pack, removing the exterior carrier portion and the support portions from the battery cell tab receiving and affixing portion electrically may separates the individual receiving and affixing sections from each other.

The aforementioned method of forming a battery pack may further include the step of adding a plurality of pouch cell type battery cells to the housing, each of the plurality of battery cells including a pair of battery cell tabs, the pair of battery cells tabs including a negative tab and a positive tab, the negative tab and the positive tab located on a single edge of the battery cell.

The aforementioned method of forming a battery pack may further include the step of receiving the plurality of pouch cell type battery cells in the housing such that the battery cell tabs of the plurality of battery cells are received in the tab receiving slots of the receiving and affixing portion.

The aforementioned method of forming a battery pack may further include the steps of (1) receiving a first battery cell by the housing such that a negative tab of the first battery cell is received in a first slot of the first receiving and affixing portion and a positive tab of the first battery cell is received in a first slot of the second receiving and affixing portion, (2) receiving a second battery cell by the housing such that a negative tab of the second battery cell is received in a second slot of the second receiving and affixing portion and a positive tab of the second battery cell is received in a first slot of the third receiving and affixing portion, (3) receiving a third battery cell by the housing such that a negative tab of the third battery cell is received in a second slot of the third receiving and affixing portion and a positive tab of the third battery cell is received in a first slot of the fourth receiving and affixing portion, (4) receiving a fourth battery cell by the housing such that a negative tab of the fourth battery cell is received in a second slot of the fourth receiving and affixing portion and a positive tab of the fourth battery cell is received in a first slot of the fifth receiving and affixing portion, and (5) receiving a fifth battery cell by the housing such that a negative tab of the fifth battery cell is received in a second slot of the fifth receiving and affixing portion and a positive tab of the fifth battery cell is received in a first slot of the sixth receiving and affixing portion.

The aforementioned method of forming a battery pack may further include the step of folding the cell tabs onto an associated tab affixing portion.

The aforementioned method of forming a battery pack may further include the steps of (1) folding the negative tab of the first battery cell onto a tab affixing portion of the first receiving and affixing portion, (2) folding the positive tab of the first battery cell and the negative tab of the second battery cell onto a tab affixing portion of the second receiving and affixing portion, (3) folding the positive tab of the second battery cell and the negative tab of the third battery cell onto a tab affixing portion of the third receiving and affixing portion, (4) folding the positive tab of the third battery cell and the negative tab of the fourth battery cell onto a tab affixing portion of the fourth receiving and affixing portion, (5) folding the positive tab of the fourth battery cell and the negative tab of the fifth battery cell onto a tab affixing portion of the fifth receiving and affixing portion, and (6) folding the positive tab of the fifth battery cell onto a tab affixing portion of the sixth receiving and affixing portion.

The aforementioned method of forming a battery pack may further include the step of affixing the cell tabs to each other and to the associated tab affixing portion.

The aforementioned method of forming a battery pack may further include the steps of (1) affixing the negative tab of the first battery cell to the tab affixing portion of the first receiving and affixing portion, (2) affixing the positive tab of the first battery cell and the negative tab of the second battery cell to the tab affixing portion of the second receiving and affixing portion, (3) affixing the positive tab of the second battery cell and the negative tab of the third battery cell to the tab affixing portion of the third receiving and affixing portion, (4) affixing the positive tab of the third battery cell and the negative tab of the fourth battery cell to the tab affixing portion of the fourth receiving and affixing portion, (5) affixing the positive tab of the fourth battery cell and the negative tab of the fifth battery cell to the tab affixing portion of the fifth receiving and affixing portion, and (6) affixing the positive tab of the fifth battery cell to a tab affixing portion of the sixth receiving and affixing portion.

In the aforementioned method of forming a battery pack, the cell tabs may be affixed to each other and to the tab affixing portion by laser welding.

Additional advantages include the ability to change the material selection and stamping dimensions if it is determined that a certain material/material thickness provides improved welds for the battery cell tabs.

Additional advantages also include using less post processing glue and sealing to prevent shorting. This is due to the recessed nature of the metal insert/stamping.

Additional advantages also include improved vibration performance of the core pack as all connections from the battery cells to the primary PCB board/flexible circuit module are constrained by the stamped lead collection part.

These and other advantages and features will be apparent from the description and the drawings.

### BRIEF DESCRIPTION OF THE DRAWINGS

FIG. 1A is a perspective view of an example battery pack.
FIG. 1B is another perspective view of the example battery pack of FIG. 1A.
FIG. 2 is a schematic of the example battery pack of FIG. 1A coupled to an example power tool.
FIG. 3 is a perspective view of an example core pack of the example battery pack of FIG. 1B.
FIG. 4 is a perspective view of the example core pack of FIG. 3 with a state of charge printed circuit board removed.
FIG. 5A is a front elevation view of an example metal stamping of an example lead collection circuit.
FIG. 5B is a side elevation view of the example metal stamping of FIG. 5A.
FIG. 5C is a perspective view of the example metal stamping of FIG. 5A.
FIG. 6A is a perspective view of the example metal stamping of FIGs. 5A - 5C insert molded in an example plastic housing.
FIG. 6B is a side elevation view of the example plastic housing and the example metal stamping of FIG. 6A.
FIG. 7A is a perspective view of the example plastic housing and the example metal stamping of FIG. 6A after extraneous metal has been removed from the example metal stamping.
FIG. 7B is side elevation view of the example plastic housing and the example metal stamping of FIG. 7A.

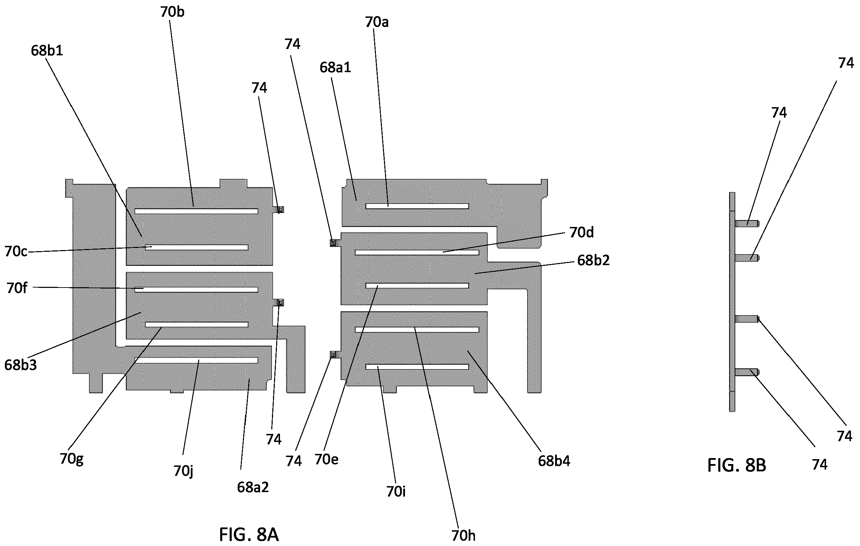

FIG. 8A is a front elevation view of the example metal stamping of FIG. 7A with the example plastic housing removed.
FIG. 8B is a side elevation view of the example metal stamping of FIG. 7B. with the example plastic housing removed.
FIG. 9A is a perspective view of the example plastic housing and example metal stamping of FIG. 8A combined with example battery cells, example battery cell straps, and an example gap pad.
FIG. 9B is FIG. 9A wherein the example plastic housing is illustrated as transparent.
FIG. 10 is FIG. 9A wherein the example plastic housing and the example gap pad are removed.
FIG. 11A is a perspective of an example battery pack latch of the example battery pack of FIG. 1A.
FIG. 11B is FIG. 11A wherein a plastic material of the example battery pack latch is show as transparent.
FIG. 11C is a side elevation view of the example battery pack latch of FIG. 11B.
FIG. 12A is a top plan view of an example metal insert of the example battery pack latch of FIG. 11A.
FIG. 12B is a perspective view of the example metal insert of FIG. 12A.
FIG. 12C is a side elevation view of the example metal insert of FIG. 12A.
FIG. 13A is side elevation view of another example plastic housing including an example living hinge and a metal stamping in a first formation.
FIG. 13B is a side elevation view of the example plastic housing and living hinge of FIG. 13A in a second formation.

### DETAILED DESCRIPTION

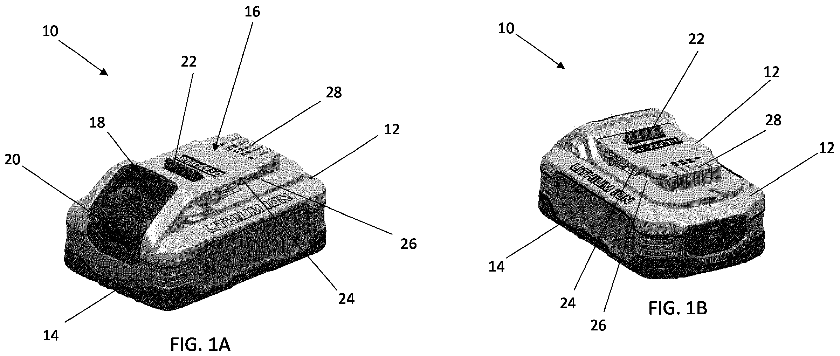

Referring to FIGs. 1A and 1B, there is illustrated an example embodiment of a battery pack 10. The battery pack 10 may include an upper housing 12 and a lower housing 14. The battery pack 10 may also include an interface 16 for mating the battery pack 10 to a power tool and/or charger. The interface 16 may include a tool affixing element 18. The tool affixing element 18 includes a user button 20 to actuate the tool affixing element 18 and a latch 22 that is received in a recess or catch in a power tool 100 to affix the battery pack 10 to the power tool 100. The interface 16 may also include a set/pair of rails 24 and a set/pair of grooves 26 associated with the rails 24. The interface may also include a set of slots 28. The set of slots 28 provide access to a set of battery pack terminals, discussed below.

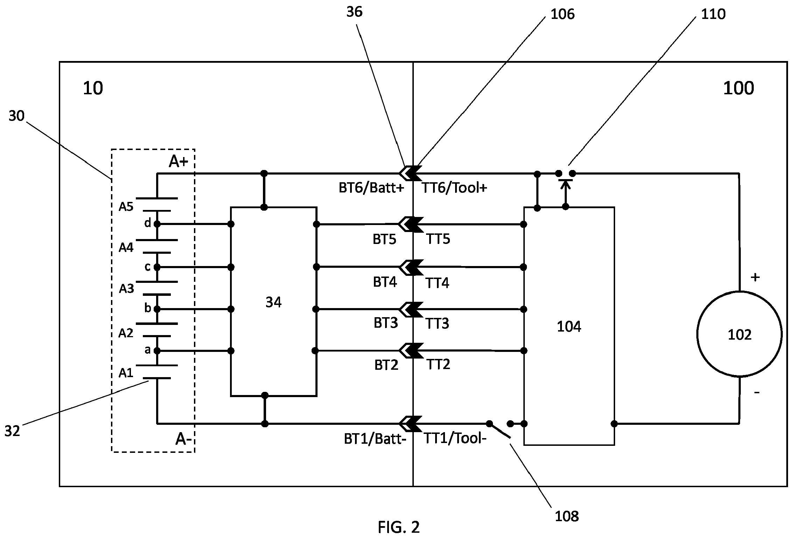

Referring to FIG. 2, there is illustrated a schematic of the example battery pack 10 and an example power tool 100. The battery pack 10 includes a string (also sometimes referred to as a set) of battery cells 30 (A). The string of battery cells 30 includes five battery cells 32 (A1-A5). The battery cells 32 are connected in series. In alternate examples, the string of battery cells 30 may include more or fewer battery cells 32 and/or the battery cells 32 may be connected in a different configuration, for example, in parallel. The string of battery cells 32 includes a positive terminal A+ and a negative terminal A-. Each battery cell 32 includes a positive terminal (also sometimes referred to as a tab) and a negative terminal/tab.

Where a positive terminal of a battery cell connects with a negative terminal of a battery cell there is a node. In the illustrated example, a positive terminal of a first cell A1 connects to a negative terminal of a second cell A2 at a node **a** and a positive terminal of the second cell A2 connects to a negative terminal of a third cell A3 at a node **b** and a positive terminal of the third cell A3 connects to a negative terminal of a fourth cell A4 at a node **c** and a positive terminal of the fourth cell A4 connects to a negative terminal of a fifth cell A5 at a node **d.**

A negative terminal of the first cell A1 is a negative terminal A- of the set of cells 30 and a positive terminal of the fifth cell A5 is a positive terminal A+ of the set of cells 30.

The example battery pack 10 may also include a pack control module 34. The pack control module 34 may include various electronic components and circuitry including but not limited to a processing unit, memory, and switches.

The battery pack 10 may also include electrical connections from each of the nodes **a - d** and the terminals A+ and A- to the pack control module 34. The electrical connections from the nodes to the pack control module 34 provide the voltage (or an indication or representation of the voltage) at each node to the pack control module 34. The pack control module 34 may use voltages at the nodes **a - d** and the terminals A+ and A- to monitor the status of the string of battery cells 30 and the individual cells 32 (A1- A5).

The battery pack 10 may also include a plurality of battery pack terminals 36. The battery pack terminals 36 are noted as BT1 - BT6 in FIG. 2. The negative terminal A- of the set of battery cells 30 is connected to the battery pack terminal BT1/Batt-. The positive terminal A+ of the set of battery cells 30 is connected to the battery pack terminal BT6/Batt+. There are electrical connections from the pack control module 34 to each of the remaining battery pack terminals BT2 - BT5. These connections and the connections between the nodes **a - d** to the pack control module 34 provide the voltage (or an indication or representation of the voltage) at each node to the battery pack terminals BT2 - BT5, respectively. For clarity, the voltage (or an indication or representation of the voltage) at node **a** is provided to battery terminal BT2, at node **b** is provided to battery terminal BT3, at node **c** is provided to battery terminal BT4 and at node **d** is provided to battery terminal BT5.

The example power tool 100 may include a motor 102 and a tool control module 104. The tool control module 104 may include various electronic components and circuitry including but not limited to a processing unit, memory, and switches. The power tool 100 may also include a plurality of power tool terminals 106. The power tool terminals 106 are noted as TT1 -TT6 in FIG. 2. The power tool terminals 106 of the set of tool terminals TT1-TT6 are configured to mate with corresponding, respective battery pack terminals 36 of the set of battery pack terminals BT1 - BT6. The tool 100 may also include electrical connections between the tool terminals TT2 -TT5 and the tool control module 104. These connections may provide the voltage (or an indication or representation of the voltage) at each node **a - d** to the tool control module 104. The tool control module 104 may use this information, along with the voltages at the Tool + and Tool - terminals to monitor the battery pack 10 and control operation of the power tool 100. The power tool 100 may also include a trigger switch 108, between the tool terminal TT1/Tool - and the tool control module 104, controlled by a user to operate the power tool 100. The power tool 100 may also include a control switch 110, between the tool terminal TT6/Tool + and the motor 102, to shut down operation of the power tool 100 based on monitoring by the tool control module 104.

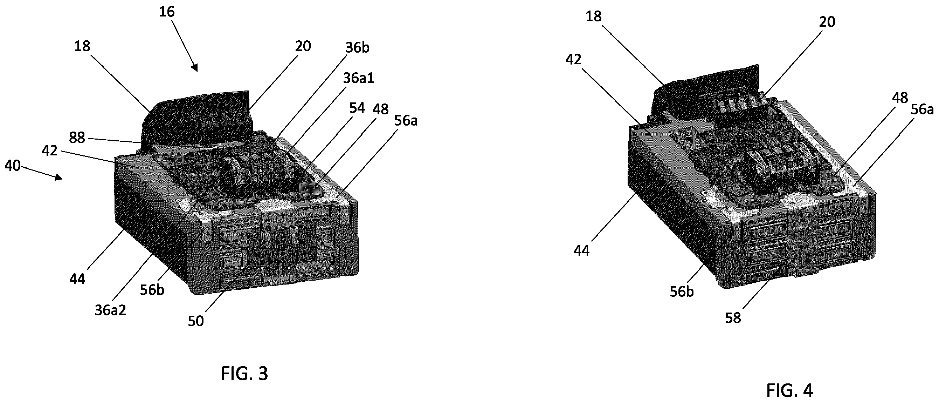

Referring to FIGs. 3 and 4, there is illustrated the battery pack of FIGs. 1A and 1B with the upper housing 12 and the lower housing 14 removed. As such, there is illustrated an example core pack 40 and the tool affixing element 16. The core pack 40 may include a housing 42 and a gap pad 44 surrounding the set of battery cells 30 (only the battery cell tabs/terminals 46 of the cells 32 are visible in FIGs. 3 and 4). The housing 42 and the gap pad 44 may form part or all of a cell holder. The core pack 40 may also include a primary printed circuit board (PCB) 48 and a secondary PCB 50. The primary PCB 48 may include a variety of electrical and electronic components affixed thereto, including but not limited to, the pack control module 34, and various other controllers, switches, heat sinks, resistors, capacitors, etc. The secondary PCB 50 may include components for a state of charge (SOC) function of the battery pack 10.

The core pack 40 may also include a battery pack terminal block 52. The battery pack terminal block 52 may include the set of battery pack terminals 36 and a terminal block housing 54 that receives the set of battery pack terminals 36 and holds the terminals 36 in a fixed position relative to each other. The terminal block housing 54 and/or the set of battery pack terminals may be affixed to the primary PCB 48. The set of battery pack terminals 36 may include a subset of power terminals 36a1, 36a2 and a subset of sense terminals 36b1, 36b2, 36b3, 36b4. In the example battery pack 10, the power terminals 36a1, 36b2 correspond to the battery pack terminals BT1/Batt- and BT6/Batt+, illustrated in FIG. 2. Also, in the example battery pack 10, the sense terminals 36b1, 36b2, 36b3, 36b4 correspond to the battery pack terminals BT2, BT3, BT4, BT5, illustrated in FIG. 2.

The core pack 40 may also include a first core pack battery strap/conductor 56a and a second core pack battery strap/conductor 56b. In the example battery pack 10, the first core pack battery strap/conductor 56a serves as the negative (-) core pack battery strap/conductor and the second core pack battery strap/conductor 56b serves as the positive (+) core pack battery strap/conductor. The negative core pack battery strap/conductor 56a connects the negative terminal A- of the set of battery cells 30 to the primary PCB 48 and the positive core pack battery strap/conductor 56b connects the positive terminal A+ of the set of battery cells 30 to the primary PCB 48.

The core pack 40 may also include a flexible circuit 58. The flexible circuit 58 may connect the secondary PCB 52 to the primary PCB 50 and nodes **a - d** to the primary PCB 50, as will be discussed in more detail below.

In general, in order to electrically connect the individual battery cells 32 in a string of series connected cells 30, the battery cell tabs 46 of "adjacent" battery cells 32 in the string must be affixed to each other. Furthermore, in order to electrically connect the nodes **a - d** at the connection point between adjacent battery cells to a component for monitoring the battery cells, e.g., the pack control module 34 or the tool control module 104, there must be a connection from the nodes.

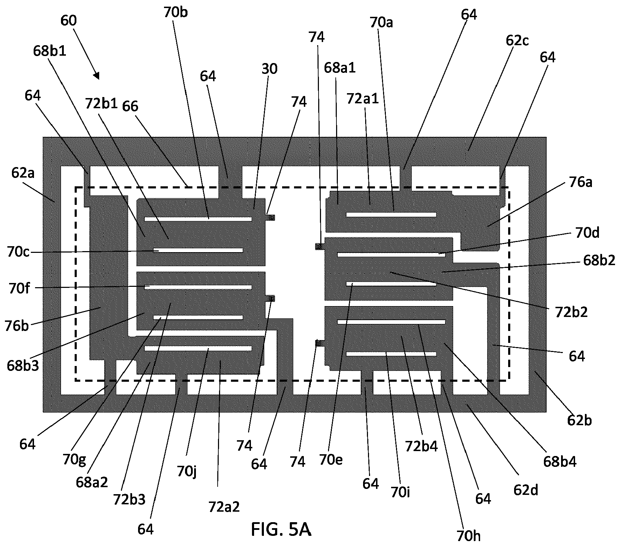

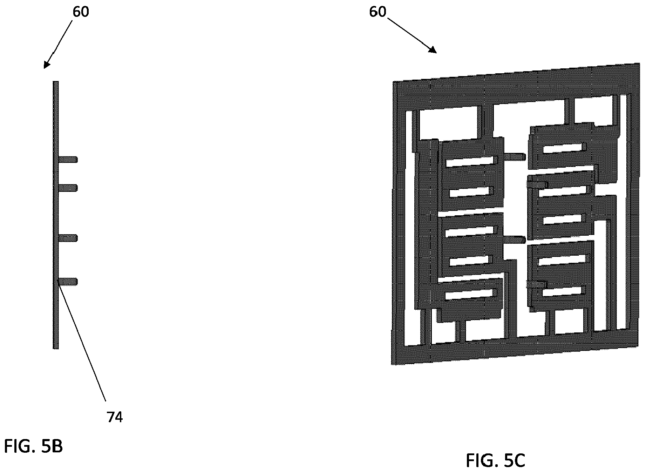

In order to reduce the component count and overall size of the core pack 40, a stamped tab/lead/terminal collection element is presented that may be formed inside a plastic cell holder or other housing. Referring to FIGs. 5A, 5B, and 5C, there is illustrated a single (one) piece metal stamping 60. The stamping 60 may be created from a solid, generally rectangular, planar piece of metal. The metal may comprise, for example, copper or another material with a similarly high IACS (electrical conductivity). Once the stamping is complete, the stamping 60 may include an exterior carrier portion 62 about a perimeter of the stamping. The exterior carrier portion 62 may include two first, opposing side sections 62a, 62b (illustrated as left and right sections in FIG. 4A) and two second, opposing side sections 62c, 62d generally perpendicular to the two first, opposing side sections 62a, 62b (illustrated as top and bottom sections in FIG. 4A), wherein the exterior carrier portion 62 is continuous about the metal stamping. The stamping 60 may also include support or connecting portions/sections 64 that connect the carrier portion 62 to a battery cell tab receiving and affixing portion 66.

The battery cell tab receiving and affixing portion 66 may include several individual receiving and affixing sections 68 for receiving and coupling the battery cell tabs 46 to the stamping 60 and to each other. The receiving and affixing sections 68 may include a first section type 68a for receiving and affixing a single battery cell tab 46 and a second section type 68b for receiving and affixing two battery cell tabs 46. The first section type 68a may include a single tab receiving slot 70 and a tab affixing portion 72. The second section type 68b may include two tab receiving slots 70 and a tab affixing portion 72 between the two tab receiving slots 70. The second section type 68b may also include a voltage sense tab 74. The voltage sense tab 74 may extend generally perpendicularly from the second section type 68b for connection to the flexible circuit 58, described in more detail below.

The first section type 68a may also include a terminal section 76 for coupling to the core pack battery strap/conductor 56. In the example illustrated herein, a first terminal section 76a of a first one of the first section type 68a1 couples to the negative core pack battery strap/conductor 56a and a second terminal section 76b of a second one of the first section type 68a2 couples to the positive core pack battery strap/conductor 56b, as described in more detail below.

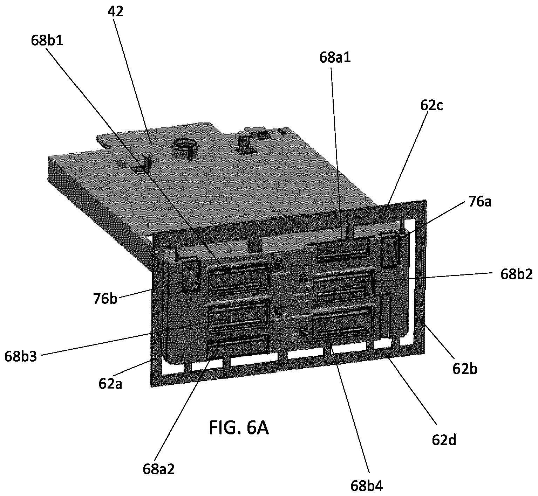

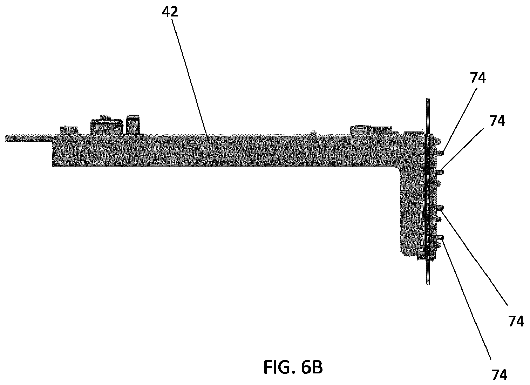

Once the metal stamping 60 is formed/created it is placed in a mold and plastic material, for example, glass filled nylon, is injection molded about the metal stamping 60 resulting in a housing 42 (forming all of or a portion of a cell holder) holding/housing the metal stamping 60, as illustrated in FIGs. 6A, 6B. Once the plastic is molded about the metal stamping 60, the carrier portion 62 and the connecting portions 64 of the metal stamping 60 extend from the housing 42. The housing 42 is formed such that the individual sections 68 of the battery cell tab receiving and affixing portions 66 are exposed and a portion of the terminal sections 76 are exposed and the voltage sense tabs 74 extend from a face 80 of the housing 42.

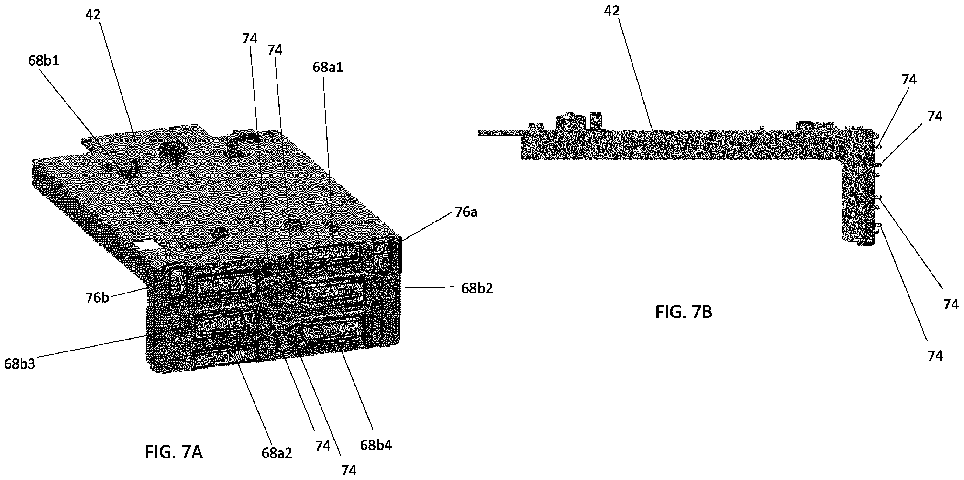

As illustrated in FIGs. 7A and 7B, after the housing 42 is formed, the exterior carrier portions 62 and the connecting portions 64 are removed from the metal stamping 60. The exterior carrier portions 62 and the connecting portions 64 may be removed by using a trim fixture (not shown) or by an assembler cutting the connecting portions 64 individually.

Once the exterior carrier portions 62 and the connecting portions 64 are removed, the set of battery cells may be added to the housing. In the example battery pack 10, the battery cells are pouch cell type battery cells. The example pouch cells include two battery cell tabs 46 (sometimes also referred to as a lead or a terminal) - a negative tab 46a and a positive tab 46b. The battery cell tabs 46 are located on a single edge or side of the cell 32. An example of such a battery cell may be found in U.S. Patent Application Serial No. 17/396,207, which is incorporated herein by reference.

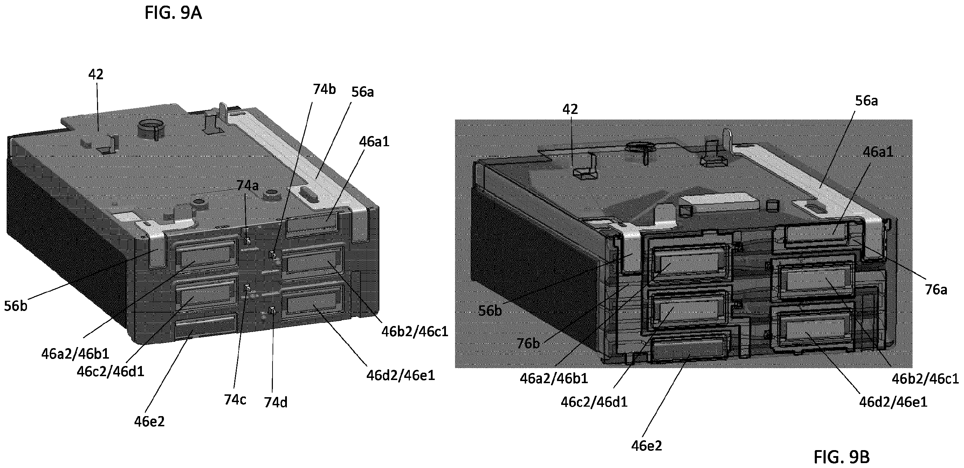

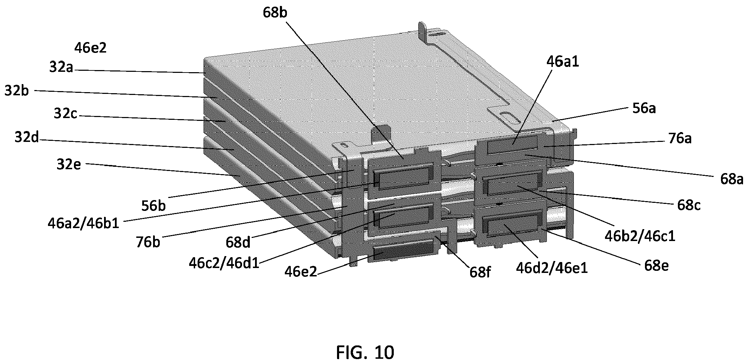

Referring to FIGs. 9A, 9B, and 10, in the example battery pack 10, (1) a first battery cell 32a (A1) is received by the housing 42 such that a negative tab 46a1 of the first battery cell 32a is received in a first slot 70a of the first receiving and affixing portion 68a1 and a positive tab 46a2 of the first battery cell 32a is received in a first slot 70b of the second receiving and affixing portion 68b1, (2) a second battery cell 32b (A2) is received by the housing 42 such that a negative tab 46b1 of the second battery cell 32b is received in a second slot 70c of the second receiving and affixing portion 68b1 and a positive tab 46b2 of the second battery cell 32b is received in a first slot 70d of the third receiving and affixing portion 68b2, (3) a third battery cell 32c (A3) is received by the housing 42 such that a negative tab 46c1 of the third battery cell 32c is received in a second slot 70e of the third receiving and affixing portion 68b2 and a positive tab 46c2 of the third battery cell 32c is received in a first slot 70f of the fourth receiving and affixing portion 68b3, (4) a fourth battery cell 32d (A4) is received by the housing 42 such that a negative tab 46d1 of the fourth battery cell 32d is received in a second slot 70g of the fourth receiving and affixing portion 68b3 and a positive tab 46d2 of the fourth battery cell 32d is received in a first slot 70h of the fifth receiving and affixing portion 68b4, and (5) a fifth battery cell 32e (A5) is received by the housing 42 such that a negative tab 46e1 of the fifth battery cell 32e is received in a second slot 70i of the fifth receiving and affixing portion 68b4 and a positive tab 46b2 of the fifth battery cell 32e is received in a first slot 70j of the sixth receiving and affixing portion 68a2.

Once the cells 32 are inserted into the housing 42, the cell tabs 46 are folded/bent onto the associated tab affixing portion 72. Specifically, (1) the negative tab 46a1 of the first battery cell 32a is folded onto a tab affixing portion 72a1 of the first receiving and affixing portion 68a1, (2) the positive tab 46a2 of the first battery cell 32a and the negative tab 46b1 of the second battery cell 32b are folded onto a tab affixing portion 72b1 of the second receiving and affixing portion 68b1, (3) the positive tab 46b2 of the second battery cell 32b and the negative tab 46c1 of the third battery cell 32c are folded onto a tab affixing portion 72b2 of the third receiving and affixing portion 68b2, (4) the positive tab 46c2 of the third battery cell 32c and the negative tab 46d1 of the fourth battery cell 32d are folded onto a tab affixing portion 72b3 of the fourth receiving and affixing portion 68b3, (5) the positive tab 46d2 of the fourth battery cell 32d and the negative tab 46e1 of the fifth battery cell 32e are folded onto a tab affixing portion 72b4 of the fifth receiving and affixing portion 68b4, and (6) the positive tab 46e2 of the fifth battery cell 32e is folded onto a tab affixing portion 72a2 of the sixth receiving and affixing portion 68a2.

Once the cell tabs 46 are folded onto the associated tab affixing portion 72, the cell tabs 46 are affixed to each other and to the associated tab affixing portion 72. The cell tabs 46 may be affixed to each other and to the tab affixing portion 72 by, for example, laser welding.

Once the cell tabs 46 are affixed to each other and the tab affixing portion 72 of the metal stamping, the nodes **a - d**, noted above, are formed. Specifically, (1) the positive tab 46a2 of the first battery cell 32a (A1), the negative tab 46b1 of the second battery cell 32b (A2) and the second battery cell tab receiving and affixing portion 68b1 form the node **a,** (2) the positive tab 46b2 of the second battery cell 32b (A2), the negative tab 46c1 of the third battery cell 32c (A3) and the third battery cell tab receiving and affixing portion 68b2 form the node **b,** (3) the positive tab 46c2 of the third battery cell 32c (A3), the negative tab 46d1 of the fourth battery cell 32d (A4) and the fourth battery cell tab receiving and affixing portion 68b3 form the node c, and (4) the positive tab 46d2 of the fourth battery cell 32d (A4), the negative tab 46e1 of the fifth battery cell 32e (A5) and the fifth battery cell tab receiving and affixing portion 68b4 form the node **d.**

Referring to FIG. 9A, once the nodes **a - d** are formed, the voltage sensing tabs, which extend through the plastic housing 42 are able to present a voltage at the respective nodes. Specifically, the voltage sensing tab 74a presents voltage at node a, the voltage sensing tab 74b presents the voltage at node b, the voltage sensing tab 74c presents the voltage at node c, and the voltage sensing tab 74d presents the voltage at node d.

Referring to FIGs. 3, 4, and 9A, once the tabs 46 of the battery cells 32 are affixed to each other and the battery cell tab receiving and affixing portion 66, an assembly including the primary PCB 48, the terminal block 52, the flexible circuit 58 and the secondary PCB 50 may be placed and/or affixed to the housing 42. The voltage sensing tabs 42 are received in hole/vias/openings in the flexible circuit 58. The flexible circuit includes traces leading from the receiving holes to the primary PCB 48. The voltage sensing tabs 74 are affixed and electrically coupled to the flexible circuit 74, for example, by welding. Once the voltage sensing tabs 74 are affixed and electrically coupled to the flexible circuit 58, the voltages at the nodes a - d are available and coupled to components on the primary PCB, including but not limited to, the battery pack control module 34. The voltage sensing tabs 74 and the voltages at the nodes a - d may also be coupled to the battery pack sense terminals 36b.

Referring to FIG. 10, once the battery cells 32 are coupled to the individual sections 68a - 68f of the battery cell tab receiving and affixing portions 66, the battery cells 32 are connected in series forming the set of battery cells 30. The negative terminal (A-) of the set of battery cells 30 is formed by coupling the negative tab 46a1 of the first battery cell 32a and the terminal section 76a of the first individual section 68a, for example, by welding or soldering. The negative terminal (A-) is coupled to the negative core pack strap 56a, for example, by welding or soldering. The negative core pack strap 56a is coupled to the primary PCB 48, for example, by welding or soldering. The positive terminal (A+) of the set of battery cells 30 is formed by coupling the positive tab 46e2 of the fifth battery cell 32e and the terminal section 76b of the sixth individual section 68f, for example, by welding or soldering. The positive terminal (A+) is coupled to the positive core pack strap 56b, for example, by welding or soldering. The positive core pack strap 56b is coupled to the primary PCB 48, for example, by welding or soldering. The negative core pack strap 56a and the positive core pack strap 56b are coupled to the negative battery pack terminal 36a1 and the positive battery pack terminal 36a2, respectively.

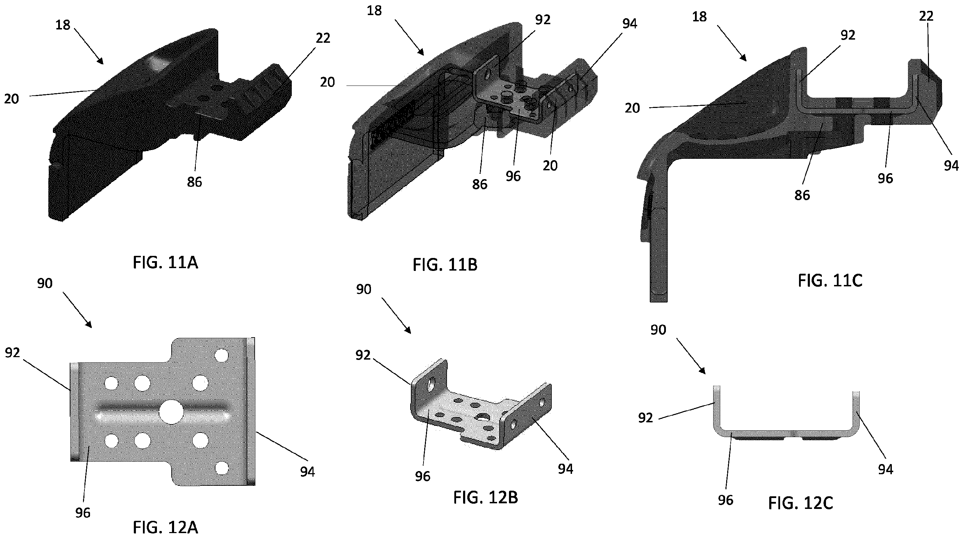

Referring to FIGs. 11A, 11B, 11C, 12A, 12B, and 12C, there is illustrated an example tool affixing element 18. The tool affixing element 18 may include a user actuation button 20 and a latch 22. The tool affixing element 18 may also include a cross bar or beam 86 connecting the user actuation button 20 and the latch 22. The tool affixing element 18 may also include a spring 88 (shown in FIG. 3) positioned between the cross bar 86 and the housing 42. The tool affixing element 18 may include a metal insert 90. The metal insert 90 may include a first leg 92, a second leg 94 and a cross bar or beam 96 connecting the first leg 92 and second leg 94.

The user actuation button 20, the latch 22 and the cross bar 86 may be made of a hard plastic material, such as glass filled nylon. The metal insert 90 may be made of a metal such as stainless steel, for example, SS 316. The user actuation button 20, the latch 22 and the cross bar 86 may be formed by injection molding the hard plastic about the metal insert 90. The metal insert 90 may include a plurality of holes through which the plastic material of the button 20, latch 22 and cross bar 86 flow in order to maintain the positioning of the metal insert 90 within the plastic material.

The metal insert 90 provides additional support and strength to the affixing element 18, particularly at (1) the junction of the user actuation button 20 and the cross bar 86 and (2) the junction of the latch 22 and the cross bar 86.

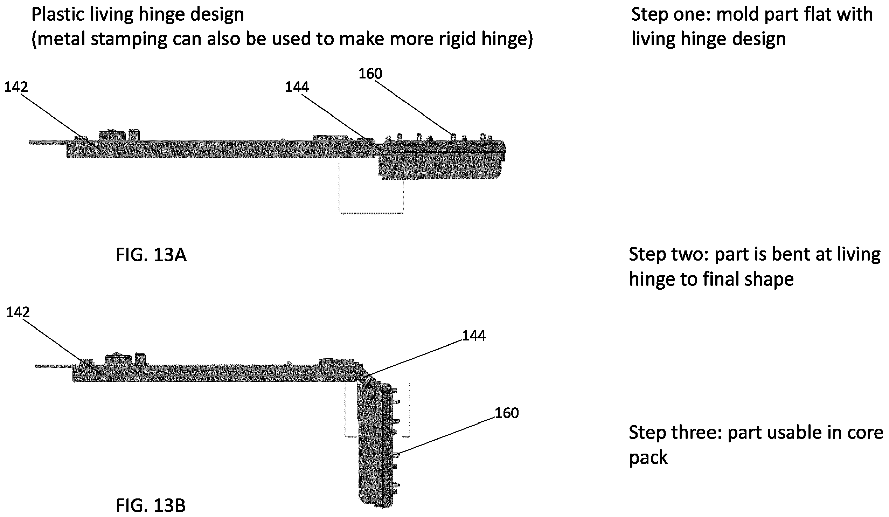

Referring to FIGs. 13A and 13B, there is illustrated another example embodiment of a housing 142 for molding about the metal stamping 160. In this embodiment, the metal stamping 160 is identical to the metal stamping 60 described above and will not be described again here. The housing 142 is molded about the metal stamping 160 in manner similar to the process described above. In this example embodiment, the housing 142 is formed with a living hinge 144. Once the molding process is complete the housing 142 is bent at the living hinge to form a final shape. Once the housing 142 is bent into its final shape, it is ready to receive the battery cells 32 as described and be affixed to the primary PCB and flexible circuit, as described above.

Numerous modifications may be made to the exemplary implementations described above. These and other implementations are within the scope of this application.

## Claims

1. A battery pack, comprising:
a housing;
a printed circuit board (PCB);
a plurality of battery cells, each of the plurality of battery cells including a pair of battery cell tabs, the pair of battery cells tabs including a negative tab and a positive tab;
a set of core pack battery straps including a negative battery strap and a positive battery strap;
a tab collection element, formed of a stamped metal and within a plastic housing, including a battery cell tab receiving and affixing portion, the battery cell tab receiving and affixing portion including individual receiving and affixing sections for receiving and coupling the battery cell tabs to the tab collection element and to each other, the receiving and affixing sections including a first section type for receiving and affixing a single battery cell tab and a second section type for receiving and affixing two battery cell tabs, the first section type including a single tab receiving slot and a tab affixing portion and the second section type including two tab receiving slots and a tab affixing portion between the two tab receiving slots.

2. The battery pack, as recited in claim 1, wherein the first section type further includes a terminal section for coupling to the set of core pack battery straps.

3. The battery pack, as recited in claim 2, wherein a first one of the first section type includes a first terminal section coupling the first one of the first section type to the negative core pack battery strap and a second one of the first section type includes a second terminal section coupling the second one of the first section type to the positive core pack battery strap.

4. The battery pack, as recited in any preceding claim, wherein the tab collection element is stamped to include (a) an exterior carrier portion about a perimeter of the stamping, the exterior carrier portion including two first, opposing side sections and two second, opposing side sections generally perpendicular to the two first, opposing side sections, wherein the exterior carrier portion is continuous about the metal stamping and (b) connecting sections the exterior carrier portion to the battery cell tab receiving and affixing portion.

5. The battery pack, a recited in any preceding claim, further comprising a flexible circuit and wherein the second section type includes a voltage sense tab, the voltage sense tab extending generally perpendicularly from the second section type for connection to the flexible circuit and the voltage sense tab of each of the second section type are connected to the flexible circuit.

6. The battery pack, as recited in claim 4, wherein the exterior carrier portion and the connecting sections are removed from the tab collection element after the plastic housing is formed about the tab collection element.

7. The battery pack, a recited in any preceding claim, wherein the battery cell tabs of the plurality of battery cells are received in the tab receiving slots of the receiving and affixing portion.

8. The battery pack, as recited in claim 7, wherein (1) a first battery cell is received by the plastic housing such that a negative tab of the first battery cell is received in a first slot of the first receiving and affixing portion and a positive tab of the first battery cell is received in a first slot of the second receiving and affixing portion, (2) a second battery cell is received by the plastic housing 42 such that a negative tab of the second battery cell is received in a second slot of the second receiving and affixing portion and a positive tab of the second battery cell is received in a first slot of the third receiving and affixing portion, (3) a third battery cell is received by the plastic housing such that a negative tab of the third battery cell is received in a second slot of the third receiving and affixing portion and a positive tab of the third battery cell is received in a first slot of the fourth receiving and affixing portion, (4) a fourth battery cell is received by the plastic housing such that a negative tab of the fourth battery cell is received in a second slot of the fourth receiving and affixing portion and a positive tab of the fourth battery cell is received in a first slot of the fifth receiving and affixing portion, and (5) a fifth battery cell is received by the plastic housing such that a negative tab of the fifth battery cell is received in a second slot of the fifth receiving and affixing portion and a positive tab of the fifth battery cell is received in a first slot of the sixth receiving and affixing portion.

9. The battery pack, as recited in claim 7or 8, wherein the cell tabs are folded onto an associated tab affixing portion.

10. The battery pack, as recited in claim 8, wherein (1) the negative tab of the first battery cell is folded onto a tab affixing portion of the first receiving and affixing portion, (2) the positive tab of the first battery cell and the negative tab of the second battery cell are folded onto a tab affixing portion of the second receiving and affixing portion, (3) the positive tab of the second battery cell and the negative tab of the third battery cell are folded onto a tab affixing portion of the third receiving and affixing portion, (4) the positive tab of the third battery cell and the negative tab of the fourth battery cell are folded onto a tab affixing portion of the fourth receiving and affixing portion, (5) the positive tab of the fourth battery cell and the negative tab of the fifth battery cell are folded onto a tab affixing portion of the fifth receiving and affixing portion, and (6) the positive tab of the fifth battery cell is folded onto a tab affixing portion of the sixth receiving and affixing portion.

11. The battery pack, as recited in claim 9 or 10, wherein the cell tabs are affixed to each other and to the associated tab affixing portion.

12. The battery pack, as recited in claim 10, wherein (1) the negative tab of the first battery cell is affixed to the tab affixing portion of the first receiving and affixing portion, (2) the positive tab of the first battery cell and the negative tab of the second battery cell are affixed to each other and to the tab affixing portion of the second receiving and affixing portion, (3) the positive tab of the second battery cell and the negative tab of the third battery cell are affixed to each other and to the tab affixing portion of the third receiving and affixing portion, (4) the positive tab of the third battery cell and the negative tab of the fourth battery cell are affixed to each other and to the tab affixing portion of the fourth receiving and affixing portion, (5) the positive tab of the fourth battery cell and the negative tab of the fifth battery cell are affixed to each other and to the tab affixing portion of the fifth receiving and affixing portion, and (6) the positive tab of the fifth battery cell is affixed to the tab affixing portion of the sixth receiving and affixing portion.

13. The battery pack, as recited in claim 11, wherein the cell tabs are affixed to each other and to the tab affixing portion by laser welding.

14. A method of forming a battery pack, comprising the steps of:
forming a tab collection element of a stamped metal, the tab collection element including a battery cell tab receiving and affixing portion, the battery cell tab receiving and affixing portion including individual receiving and affixing sections for receiving and coupling a plurality of battery cell tabs to the tab collection element and to each other, the receiving and affixing sections including a first section type for receiving and affixing a single battery cell tab and a second section type for receiving and affixing two battery cell tabs, the first section type including a single tab receiving slot and a tab affixing portion and the second section type including two tab receiving slots and a tab affixing portion between the two tab receiving slots;
placing the tab collection element in a mold; and
injection molding plastic material into the mold about the tab collection element to form a housing.

15. The method of forming a battery pack, as recited in claim 14, wherein the tab collection element is formed with an exterior carrier portion about the perimeter of the stamping.
